# EUROPEAN PATENT APPLICATION

(11) **EP 4 155 229 A1**
(43) Date of publication of application: **29.03.2023**
(21) Application number: 21756780.9
(22) Date of filing: 16.02.2021
(51) Int. Cl.: B65D 65/40

(54) **PAPER CONTAINER FOR PACKED FOOD**

(30) Priority: 17.02.2020 JP 2020024799
(71) Applicant: Nippon Paper Industries Co., Ltd., Tokyo 114-0002 (JP)
(72) Inventor: OKUBO, Katsuyuki, Tokyo 114-0002 (JP); MIYAGAWA, Shigekazu, Tokyo 114-0002 (JP)
(74) Representative: Murgitroyd & Company
(86) International application number: PCT/JP2021/005781
(87) International publication number: WO 2021/166919

(57) **Abstract**

To obtain a paper container for a filled food capable of preventing leakage of a content liquid, there is provided a paper container for a filled food, which is formed of a container material including, from an outer surface side to an inner surface side of the container material: a thermoplastic resin layer (layer A) containing a polyethylene resin as a main component; a paper base layer (layer B); a thermoplastic resin layer (layer C) containing a polyethylene resin as a main component; a barrier layer (layer D); an adhesive layer (layer E) containing an ethylene-methacrylic acid copolymer resin as a main component; a thermoplastic resin layer (layer I) containing a polyethylene resin as a main component; a thermoplastic resin layer (layer F) containing a polyethylene resin as a main component; a thermoplastic resin layer (layer G) obtained by blending a polyethylene resin and a polypropylene resin; and a thermoplastic resin layer (layer H) obtained by adding, to a polyolefin-based resin, a compounding agent selected from polyhydric alcohols or polyhydric alcohol derivatives, and polyoxyethylene derivatives, wherein the adhesive layer (layer E) containing an ethylene-methacrylic acid copolymer resin as a main component and the thermoplastic resin layer (layer I) containing a polyethylene resin as a main component are formed into a laminated state through coextrusion of raw materials.

## Description

### Technical Field

The present invention relates to a paper container for a filled food to be used for manufacturing a food filled in a container, such as tofu in a container, obtained by filling a material of the food into the container, hermetically sealing the container, and heating and coagulating the material.

### Background Art

There is known a food, such as tofu, soft adzukibean jelly, or pudding, which is manufactured by filling a material of the food into a container, hermetically sealing the container, and heating and coagulating the material (hereinafter referred to as "filled food").

For example, when the filled food is tofu, a tofu material containing soybean milk and a coagulant is filled into a container, and the container is hermetically sealed. Then, the container into which the tofu material is filled is heated at a temperature of from 60 degrees to 100 degrees, thereby manufacturing filled tofu (see, for example, Patent Literature 1).

As containers to be used for the filled food including filled tofu, for example, a metal container, a synthetic resin container, and a paper container are known. However, the paper container has been widely used in view of, for example, ease of disposal after use, and recycling characteristics. As a paper container for hermetically accommodating a food, there is known a paper container formed of a paper container material including, from an outer surface side to an inner surface side thereof, a thermoplastic resin layer containing a polyethylene resin as a main component, a paper base layer, a thermoplastic resin layer containing a polyethylene resin as a main component, a barrier layer, and a thermoplastic resin layer that contains a polyethylene resin as a main component and is formed as an innermost layer (see, for example, Patent Literature 2).

However, when the paper container formed of the paper container material as described in Patent Literature 2 is used as a container for a filled food, separability is poor between the food coagulated in the container and the thermoplastic resin layer that contains a polyethylene resin as a main component and forms an inner surface of the container, and thus the food adheres to the inner surface of the container when being taken out of the container. Accordingly, it may be difficult to take out the food, or a part of the food may be chipped.

As a substance for improving separability between the inner surface of the container and the food coagulated in the container, there has been proposed a polyolefin-based resin composite obtained by adding, to a polyolefin-based resin, a compounding agent selected from polyhydric alcohols or polyhydric alcohol derivatives, and polyoxyethylene derivatives (see, for example, Patent Literature 3).

When the technology as described in Patent Literature 3 is applied to the innermost layer of the paper container material as described in Patent Literature 2, separability is improved between the inner surface of the paper container and the food, and hence the food can be easily taken out of the paper container.

As an example of applying the technology as described in Patent Literature 3 to the innermost layer of the paper container material as described in Patent Literature 2, it is conceivable that, on the above-mentioned thermoplastic resin layer that contains a polyethylene resin as a main component and forms the innermost layer of the paper container material, a polyethylene resin film, to which a compounding agent selected from polyhydric alcohols or polyhydric alcohol derivatives, and polyoxyethylene derivatives is added, is laminated and formed as an innermost layer.

However, when the paper container formed of the paper container material thus obtained is used as a container for a filled food, delamination occurs between the polyethylene resin layer, which includes the compounding agent added thereto and forms the innermost layer, and the thermoplastic resin layer, which contains a polyethylene resin as a main component and is arranged on an inner side of the polyethylene resin layer, and thus a content liquid may leak in some cases.

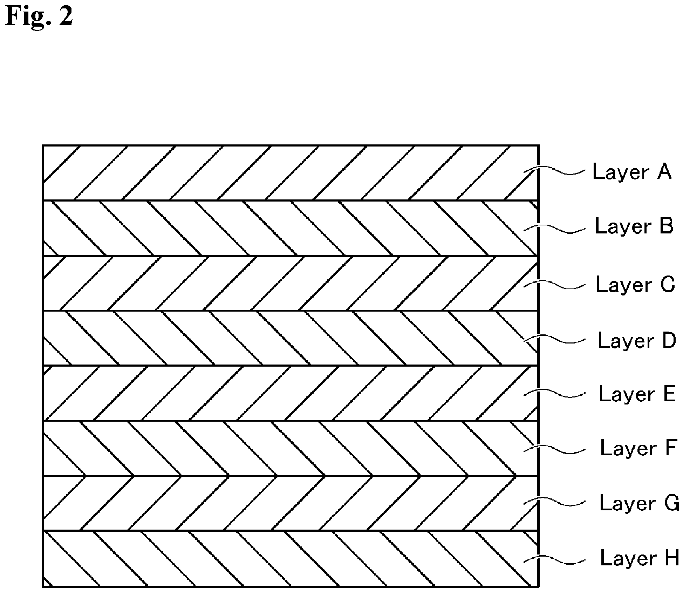

As a device for solving the above-mentioned problem, as illustrated in FIG. 2, there has been proposed a paper container for a filled food formed of a container material including, from an outer surface side to an inner surface side thereof, a thermoplastic resin layer (layer A) containing a polyethylene resin as a main component, a paper base layer (layer B), a thermoplastic resin layer (layer C) containing a polyethylene resin as a main component, a barrier layer (layer D), an adhesive layer (layer E) containing an ethylene-methacrylic acid copolymer resin as a main component, a thermoplastic resin layer (layer F) containing a polyethylene resin as a main component, a thermoplastic resin layer (layer G) obtained by blending a polyethylene resin and a polypropylene resin, and a thermoplastic resin layer (layer H) obtained by adding, to a polyolefin-based resin, a compounding agent selected from polyhydric alcohols or polyhydric alcohol derivatives, and polyoxyethylene derivatives (see, for example,

### Patent Literature 4).

The paper container for a filled food as described in Patent Literature 4 has a laminate structure in which the thermoplastic resin layer (layer G) obtained by blending a polyethylene resin and a polypropylene resin is interposed between the thermoplastic resin layer (layer H) and the thermoplastic resin layer (layer F) that contains a polyethylene resin as a main component and is arranged on the inner side of the thermoplastic resin layer (layer H). Accordingly, in manufacturing processes of filling a material of the food such as tofu into a container, hermetically sealing the container, and heating and coagulating the material, elution of the compounding agent from the thermoplastic resin layer (layer H) being the innermost layer is suppressed by the thermoplastic resin layer (layer G), and the compounding agent can be prevented from being transferred to the thermoplastic resin layer (layer F). Accordingly, the thermoplastic resin layer (layer H) can be prevented from being delaminated from the thermoplastic resin layer (layer F), thereby being capable of obtaining the paper container for a filled food free from leakage of the content liquid.

### Citation List

### Patent Literature

[PTL 1] JP 2014-187975 A1
[PTL 2] JP 2004-17984 A
[PTL 3] JP 7-62163 A
[PTL 4] JP 2017-24762 A

### Summary of Invention

### Technical Problem

In the container material to be used for the paper container for a filled food as described in Patent Literature 4, on the adhesive layer (layer E) that contains an ethylene-methacrylic acid copolymer resin as a main component and is laminated on the barrier layer (layer D), the thermoplastic resin layer (layer F) containing a polyethylene resin as a main component is laminated in a multilayered manner. However, the adhesive layer (layer E) and the thermoplastic resin layer (layer F) respectively contain different resins, that is, an ethylene-methacrylic acid copolymer resin and a polyethylene resin as main components. Accordingly, it cannot be said that adhesiveness between the adhesive layer (layer E) and the thermoplastic resin layer (layer F) is high.

Adhesive strength between the adhesive layer (layer E) and the thermoplastic resin layer (layer F) is a condition required to maintain performance of the paper container for a filled food, but adhesiveness between an ethylene-methacrylic acid copolymer resin and a polyethylene resin is not high. Accordingly, there is a problem in that, due to long storage in the paper container for a filled food, or due to a heating treatment in a manufacturing process, for example, when the filled food is tofu, the adhesive strength between the adhesive layer (layer E) and the thermoplastic resin layer (layer F) is reduced, with the result that delamination may occur between the adhesive layer (layer E) and the thermoplastic resin layer (layer F) to cause leakage of the content liquid.

It is an object of the present invention to provide a paper container for a filled food capable of increasing initial adhesive strength in a laminate, and preventing leakage of a content liquid due to delamination.

### Solution to Problem

In order to achieve the above-mentioned object, according to the invention described in claim 1, there is provided a paper container for a filled food, which is formed of a container material including, from an outer surface side to an inner surface side of the container material: a thermoplastic resin layer (layer A) containing a polyethylene resin as a main component; a paper base layer (layer B); a thermoplastic resin layer (layer C) containing a polyethylene resin as a main component; a barrier layer (layer D); an adhesive layer (layer E) containing an ethylene-methacrylic acid copolymer resin as a main component; a thermoplastic resin layer (layer I) containing a polyethylene resin as a main component; a thermoplastic resin layer (layer F) containing a polyethylene resin as a main component; a thermoplastic resin layer (layer G) obtained by blending a polyethylene resin and a polypropylene resin; and a thermoplastic resin layer (layer H) obtained by adding, to a polyolefin-based resin, a compounding agent selected from polyhydric alcohols or polyhydric alcohol derivatives, and polyoxyethylene derivatives, wherein the adhesive layer (layer E) containing an ethylene-methacrylic acid copolymer resin as a main component and the thermoplastic resin layer (layer I) containing a polyethylene resin as a main component are formed into a laminated state through coextrusion of raw materials.

According to the invention described in claim 1, the adhesive layer (layer E) containing an ethylene-methacrylic acid copolymer resin as a main component and the thermoplastic resin layer (layer I) containing a polyethylene resin as a main component are formed into a laminated state through coextrusion of raw materials. Accordingly, at the time of the coextrusion, the raw material of the adhesive layer (layer E) containing an ethylene-methacrylic acid copolymer resin as a main component and the raw material of the thermoplastic resin layer (layer I) containing a polyethylene resin as a main component are brought into contact with each other, and contact surface sides are brought into a mixed state, with the result that the adhesive layer (layer E) and the thermoplastic resin layer (layer I) have the laminate structure free from delamination. Further, the thermoplastic resin layer (layer F) is laminated in a multilayered manner on the thermoplastic resin layer (layer I) laminated on the adhesive layer (layer E). Accordingly, high adhesive strength is obtained between the thermoplastic resin layer (layer I) and the thermoplastic resin layer (layer F) because the thermoplastic resin layer (layer I) and the thermoplastic resin layer (layer F) contain the same resin. Therefore, unlike the paper container for a filled food as described in Patent Literature 4, there is no problem in that delamination occurs between the adhesive layer (layer E) and the thermoplastic resin layer (layer F), and hence occurrence of a situation such as leakage of a content liquid due to delamination can be prevented.

According to the invention described in claim 2, the coextrusion, which is described in claim 1, of the adhesive layer (layer E) containing an ethylene-methacrylic acid copolymer resin as a main component and the thermoplastic resin layer (layer I) containing a polyethylene resin as a main component is performed through T-die extrusion.

According to the invention described in claim 2, the coextrusion, which is described in claim 1, of the adhesive layer (layer E) containing an ethylene-methacrylic acid copolymer resin as a main component and the thermoplastic resin layer (layer I) containing a polyethylene resin as a main component is performed through the T-die extrusion. Accordingly, at the time of the coextrusion, the raw material of the adhesive layer (layer E) containing an ethylene-methacrylic acid copolymer resin as a main component and the raw material of the thermoplastic resin layer (layer I) containing a polyethylene resin as a main component are brought into contact with each other in a T die, and thus a mixing extent of the raw materials is increased, with the result that the adhesive layer (layer E) and the thermoplastic resin layer (layer I) have the laminate structure further free from delamination. Accordingly, occurrence of a situation such as leakage of the content liquid due to delamination can be more reliably prevented.

### Advantageous Effects of Invention

According to the paper container for a filled food of the present invention, occurrence of a situation such as leakage of a content liquid due to delamination can be prevented.

### Brief Description of Drawings

FIG. 1 is an explanatory view for illustrating an example of a laminate structure of a container material for forming a paper container for a filled food according to the present invention.

FIG. 2 is an explanatory view for illustrating a laminate structure of a container material for forming a related-art paper container for a filled food.

### Description of Embodiments

Now, an example of a paper container for a filled food according to an embodiment of the present invention is described in detail with reference to the drawings.

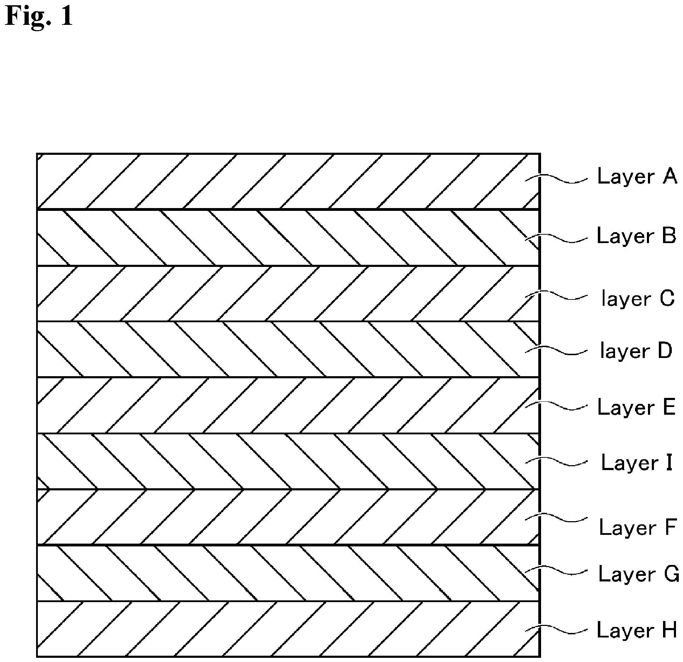

FIG. 1 is an explanatory view for illustrating an example of a laminate structure of a container material for forming a paper container for a filled food according to the present invention.

The paper container for a filled food according to this embodiment is formed of a container material including, from an outer surface side to an inner surface side of the container material: a thermoplastic resin layer (layer A) containing a polyethylene resin as a main component; a paper base layer (layer B); a thermoplastic resin layer (layer C) containing a polyethylene resin as a main component; a barrier layer (layer D); an adhesive layer (layer E) containing an ethylene-methacrylic acid copolymer resin as a main component; a thermoplastic resin layer (layer I) containing a polyethylene resin as a main component; a thermoplastic resin layer (layer F) containing a polyethylene resin as a main component; a thermoplastic resin layer (layer G) obtained by blending a polyethylene resin and a polypropylene resin; and a thermoplastic resin layer (layer H) obtained by adding, to a polyolefin-based resin, a compounding agent selected from polyhydric alcohols or polyhydric alcohol derivatives, and polyoxyethylene derivatives. The adhesive layer (layer E) containing an ethylene-methacrylic acid copolymer resin as a main component and the thermoplastic resin layer (layer I) containing a polyethylene resin as a main component are formed into a laminated state through coextrusion of raw materials.

In the above-mentioned laminate structure of the container material, a laminate structure including the thermoplastic resin layer (layer A) containing a polyethylene resin as a main component, the paper base layer (layer B), the thermoplastic resin layer (layer C) containing a polyethylene resin as a main component, the barrier layer (layer D), the adhesive layer (layer E) containing an ethylene-methacrylic acid copolymer resin as a main component, the thermoplastic resin layer (layer F) containing a polyethylene resin as a main component, the thermoplastic resin layer (layer G) obtained by blending a polyethylene resin and a polypropylene resin, and the thermoplastic resin layer (layer H) obtained by adding, to a polyolefin-based resin, a compounding agent selected from polyhydric alcohols or polyhydric alcohol derivatives, and polyoxyethylene derivatives is not different from that of the container material to be used for the related-art paper container for a filled food as described in Patent Literature 4.

In this embodiment, the thermoplastic resin layer (layer C) contains a linear low-density polyethylene resin (LLDPE) as a component, and the thermoplastic resin layer (layer F) contains a high-pressure-processed low-density polyethylene resin (LDPE) as a component. Further, aluminum foil is used as the barrier layer (layer D).

In the container material for forming the paper container for a filled food according to the present invention, the thermoplastic resin layer (layer I) containing a polyethylene resin as a main component is laminated between the adhesive layer (layer E) and the thermoplastic resin layer (layer F) of the laminate structure laminated as described above.

Description is made of an example of manufacture of the container material having the laminate structure described above.

First, the thermoplastic resin layer (layer A) is laminated in a multilayered manner on an outer surface of the paper base layer (layer B).

Next, the thermoplastic resin layer (layer C) containing a polyethylene resin as a main component is laminated in a multilayered manner on an inner surface of the paper base layer (layer B), and the barrier layer (layer D) is laminated in a multilayered manner on the thermoplastic resin layer (layer C).

Next, the adhesive layer (layer E) and the thermoplastic resin layer (layer I) are laminated in a multilayered manner on the barrier layer (layer D) in the stated order. When the adhesive layer (layer E) and the thermoplastic resin layer (layer I) are laminated, a raw material of the adhesive layer (layer E) and a raw material of the thermoplastic resin layer (layer I) are laminated in a multilayered manner on the barrier layer (layer D) through coextrusion. In this embodiment, as the coextrusion of the raw materials of the adhesive layer (layer E) and the thermoplastic resin layer (layer I), T-die extrusion is employed.

Next, the thermoplastic resin layer (layer F), the thermoplastic resin layer (layer G), and the thermoplastic resin layer (layer H) are laminated in a multilayered manner on the thermoplastic resin layer (layer I) in the stated order.

When the thermoplastic resin layer (layer F), the thermoplastic resin layer (layer G), and the thermoplastic resin layer (layer H) are laminated, a three-layer film including the thermoplastic resin layer (layer F), the thermoplastic resin layer (layer G), and the thermoplastic resin layer (layer H) may be laminated in a multilayered manner on the thermoplastic resin layer (layer I). Alternatively, the thermoplastic resin layer (layer F), the thermoplastic resin layer (layer G), and the thermoplastic resin layer (layer H) may be laminated in a multilayered manner on the thermoplastic resin layer (layer I) through coextrusion of raw materials thereof.

In this embodiment, first, the thermoplastic resin layer (layer A) is laminated on the outer surface of the paper base layer (layer B). However, after the thermoplastic resin layer (layer C), the barrier layer (layer D), the adhesive layer (layer E), the thermoplastic resin layer (layer I), the thermoplastic resin layer (layer F), the thermoplastic resin layer (layer G), and the thermoplastic resin layer (layer H) are laminated on the inner surface side of the paper base layer (layer B), the thermoplastic resin layer (layer A) may be laminated on the outer surface of the paper base layer (layer B) lastly.

In the paper container for a filled food formed of the container material having the laminate structure manufactured as described above, the adhesive layer (layer E) and the thermoplastic resin layer (layer I) are formed into the laminated state through coextrusion of raw materials, and hence the raw materials are brought into contact with each other. Accordingly, even when the adhesive layer (layer E) and the thermoplastic resin layer (layer I) contain different resins as main components, contact surface sides are brought into a mixed state, and thus the adhesive layer (layer E) and the thermoplastic resin layer (layer I) have the laminate structure free from delamination.

The thermoplastic resin layer (layer F) is laminated in a multilayered manner on the thermoplastic resin layer (layer I) laminated on the adhesive layer (layer E). Accordingly, high adhesive strength is obtained between the adhesive layer (layer E) and the thermoplastic resin layer (layer I) laminated on the adhesive layer (layer E) because the thermoplastic resin layer (layer I) and the thermoplastic resin layer (layer F) contain the same resin.

In this embodiment, the coextrusion of the raw material of the adhesive layer (layer E) and the raw material of the thermoplastic resin layer (layer I) is performed through the T-die extrusion. Accordingly, the raw material of the adhesive layer (layer E) and the raw material of the thermoplastic resin layer (layer I) are brought into contact and mixed with each other in a T die, and thus a mixing extent of the raw materials is increased, with the result that the adhesive layer (layer E) and the thermoplastic resin layer (layer I) have the laminate structure further free from delamination.

## Claims

1. A paper container for a filled food, which is formed of a container material comprising, from an outer surface side to an inner surface side of the container material:
a thermoplastic resin layer (layer A) containing a polyethylene resin as a main component;
a paper base layer (layer B);
a thermoplastic resin layer (layer C) containing a polyethylene resin as a main component;
a barrier layer (layer D);
an adhesive layer (layer E) containing an ethylene-methacrylic acid copolymer resin as a main component;
a thermoplastic resin layer (layer I) containing a polyethylene resin as a main component;
a thermoplastic resin layer (layer F) containing a polyethylene resin as a main component;
a thermoplastic resin layer (layer G) obtained by blending a polyethylene resin and a polypropylene resin; and
a thermoplastic resin layer (layer H) obtained by adding, to a polyolefin-based resin, a compounding agent selected from polyhydric alcohols or polyhydric alcohol derivatives, and polyoxyethylene derivatives,
wherein the adhesive layer (layer E) containing an ethylene-methacrylic acid copolymer resin as a main component and the thermoplastic resin layer (layer I) containing a polyethylene resin as a main component are formed into a laminated state through coextrusion of raw materials.

2. The paper container for a filled food according to claim 1, wherein the coextrusion of the adhesive layer (layer E) containing an ethylene-methacrylic acid copolymer resin as a main component and the thermoplastic resin layer (layer I) containing a polyethylene resin as a main component is performed through T-die extrusion.
